# EUROPEAN PATENT APPLICATION

(11) **EP 4 672 528 A1**
(43) Date of publication of application: **31.12.2025**
(21) Application number: 24185490.0
(22) Date of filing: 28.06.2024
(51) Int. Cl.: H02H 3/02

(54) **SOLID STATE CIRCUIT BREAKER AND METHOD**

(71) Applicant: ABB SCHWEIZ AG, 5400 Baden (CH)
(72) Inventor: SCHWEIZER, Mario, 5406 Rütihof (CH); LAZAREVIC, Vladan, 5406 Baden-Rütihof, Aargau (CH); ABPLANALP, Markus Andreas, 5405 Baden-Dättwil (CH)
(74) Representative: Maiwald GmbH

(57) **Abstract**

The invention relates to a multifunction Solid State Circuit Breaker, SSCB, arrangement is provided. The SSCB has an input side and an output side, wherein the input side has an input terminal at a first voltage and an input terminal at a second voltage, and the output side has an output terminal at the first voltage and an output terminal at the second voltage. The SSCB comprises a connective circuit between the input terminal and the output terminal at the first voltage, and / or a connecting circuit between the input terminal and the output terminal at the second voltage; wherein the connective circuit comprises at least one semiconductor switch, and a voltage clamping device Z1 parallel to the at least one semiconductor switch; wherein the input terminal and the output terminal at the first voltage and the input terminal and the output terminal at the second voltage are connected directly with each other in absence of the connective circuit. The SSCB further comprises a vertical freewheeling circuit coupled between a first connection point between the input terminal and the output terminal at the first voltage and a second connection point between the input terminal and the output terminal at the second voltage, wherein the freewheeling circuit includes a switchable, i.e. interruptible freewheeling path.

## Description

### Technical Field

The invention relates to a Solid State Circuit Breaker, SSCB, arrangement, a method for protecting a power network, and a use of the SSCB arrangement.

### Background

In upcoming DC microgrids and other applications, solid state circuit breakers (SSCB) or hybrid circuit breakers play a crucial role in protecting the system. Due to the very high interruption speed, faults can be isolated quickly, and related voltage sags are very short, such that continuous system operation can easily be maintained. However, in certain situations, coordination among several breakers in complex systems would benefit from breakers with current limitation functionality. Today's SSCBs are mostly based on a combination of two anti-serial semiconductors and a parallel varistor that dissipates the energy stored in inductive elements in the network. With this technology, it is very difficult to limit the current for a reasonable time duration because of excessive losses in the varistor and in the semiconductors during the current limiting phase.

### Summary of the invention

There may be a desire to provide an improved SSCB arrangement.

The problem is solved by the subject-matter of the independent claims. Embodiments are provided by the dependent claims, the following description and the accompanying figures.

The described embodiments similarly pertain to the SSCB and the method for protecting a power network. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a multifunction Solid State Circuit Breaker, SSCB, arrangement is provided. The SSCB has an input side and an output side, wherein the input side has an input terminal at a first voltage and an input terminal at a second voltage, and the output side has an output terminal at the first voltage and an output terminal at the second voltage. The SSCB comprises a connective circuit between the input terminal and the output terminal at the first voltage, and / or a connecting circuit between the input terminal and the output terminal at the second voltage; wherein the connective circuit comprises at least one semiconductor switch, and a voltage clamping device Z1 parallel to the at least one semiconductor switch; wherein the input terminal and the output terminal at the first voltage or the input terminal and the output terminal at the second voltage are connected directly with each other in absence of the connective circuit. The SSCB further comprises a vertical freewheeling circuit coupled between a first connection point between the input terminal and the output terminal at the first voltage and a second connection point between the input terminal and the output terminal at the second voltage, wherein the freewheeling circuit includes a switchable, i.e. interruptible freewheeling path.

It is noted that the definition above includes an "and/or" in the phrase "a connective circuit between the input terminal and the output terminal at the first voltage, and / or a connecting circuit between the input terminal and the output terminal at the second voltage". This means, that there is only one connective circuit located between the input and output terminals at the first voltage, e.g. positive voltage, or there is only one connective circuit located between the input and output terminals at the second voltage, e.g. ground or neutral voltage. In the first case, the input and output terminals at the second voltage level are directly connected with each other. Accordingly, in the latter case, the input and output terminals at the first voltage level are directly connected with each other. However, there can also be two connective circuits, one between the input and output terminals at the first voltage level and one between the input and output terminals at the second voltage level. That is, in case there is no connective circuit, the input terminal and the output terminal are directly connected with each other.

In other words, the SSCB comprises a freewheeling circuit including a switchable, i.e. interruptible freewheeling path, wherein the switchable freewheeling path is coupled between a first connection point of a first nominal current path for a first voltage and a second connection point of a second nominal current path for a second voltage. The SSCB arrangement further comprises a connective circuit in the first and/or second nominal current path comprising at least one semiconductor switch, and a voltage clamping device Z1 parallel to the at least one semiconductor switch.

The expression "switchable freewheeling path" means that the path can be activated or deactivated. As known to a skilled person, the freewheeling path is connected to lines at different voltages. That is, the first nominal current path may be the positive line of a power grid corresponding to the first voltage, and the second nominal current path may be the negative line of a power grid corresponding to the second voltage. However, as shown in the embodiments below, the arrangement can also be applied to bipolar grids comprising a neutral line, so that the second nominal current path may be the neutral, or the first nominal current path is the neutral line, and the second nominal current path is the negative line. That is, expressed more generally, the freewheeling path can be applied to DC power constellation between two voltage levels. It is also known to a skilled person, that a freewheeling path is applied to eliminate the effect of high inverse voltage arising when the current flow through an inductance is interrupted suddenly. The inductance in the present case is the line inductance. A line inductance may be present on both sides of the SSCB, i.e. on the input side as well as on the output side. The expression "nominal current path" takes into account that a connection point of the freewheeling path may be before or after a semiconductor switch through which the current flows between input and output terminal, or, for example at a common emitter/source terminal of two semiconductor switches and/or diodes connected in series through which the current flows between input and output terminal.

In this sense, the input terminal and the output terminal at the first voltage have the same or nearly the same voltage, herein also referred to a first voltage level. The input terminal and the output terminal at the second voltage have also the same or nearly the same voltage, herein also referred to a second voltage level, which differs from the first voltage level. Consequently, the switchable freewheeling path is connected between different voltage levels.

The arrangement of semiconductors, diodes and/or resistors such as varistors between an input and output terminal, i.e., within a nominal current path at a positive, a neutral, or a negative voltage is also referred to as "connective circuit" in this disclosure. The purpose of such a connective circuit may be to provide an SSCB functionality.

The switching of the SSCB and the freewheeling semiconductor switch may be accomplished by a controller. The controller may be part, for example, of the SSCB or the converter.

A freewheeling path for the fault current significantly improves the situation compared to having a connective circuit only that may consist of, e.g., two anti-serial semiconductors and a varistor parallel to the anti-serial semiconductors, as it reduces the resulting switching frequency and the losses in the varistor substantially during current limiting operation. However, if a usual freewheeling path, consisting for example of a diode, would be used, this would have one major drawback. The fault energy will be dissipated in the fault instead of in the breaker, and the time until the fault current decays to zero can be very long for highly inductive networks. This could be an issue in certain situations. It could be desirable to interrupt the fault current fast, in a controlled way and dissipate the energy in the breaker if needed. The proposed solution is based on a modified circuit with an additional switchable freewheeling path that enables current limiting functionality for several tens of milliseconds for SSCBs and hybrid breakers as it reduces the losses in the varistor and the switching frequency of the semiconductors substantially during current limiting operation. The freewheeling path can be interrupted with an additional semiconductor switch, that can be of lower rated voltage than the main semiconductor switches.

The terms "switching off", "interrupting", and "de-activating" that are used in this disclosure with respect to the freewheeling path have the same meaning. Similarly, "switching on", and "activating" have the same meaning.

The term "nominal current path" relates to a nominal, stable operation mode. In the nominal operation mode, the protection functions of the SSCB arrangement are not actively in use. As described below, the freewheeling circuit may comprise a voltage clamping device or other device parallel to the freewheeling path.

The switchable vertical freewheeling circuit allows to have three operation modes: a nominal mode, a current limitation mode, which is entered in case of, e.g., a fault, and a fast current interruption mode, which follows the current limitation mode.

According to an embodiment, in a current limitation mode, the switchable freewheeling path is configured to be activated, and the at least one semiconductor switch of the connective circuit is configured to be repeatedly turned on and turned off.

"Activated" means that the freewheeling path is not interrupted such that current can flow through the freewheeling path. For example, the current can flow from the negative line through a freewheeling diode to the inductance on that side on which a fault is occurring. This happens when the current through the semiconductors of the connective circuit(s) is interrupted by switching these semiconductors off. When the semiconductor switches of the connective circuit are turned on, the high current in case of a fault flows from the non-fault side to the fault side through the semiconductors, i.e. the semiconductor itself or an internal or external anti-parallel diode. By switching the connective switches on and off, the current can be kept within a pre-defined current band. While the connective switches are turned off, the voltage on fault side is defined by the devices between the line inductance and returning path, e.g., the negative line.

Due to the activated freewheeling path, this voltage is low, e.g. only a few Volts, resulting in a low change (flat negative ramp) of the current amplitude which allows to keep the switching frequency low to keep the current within the current band. The low switching frequency again allows for low losses in the devices of the connective circuit such that overheating is avoided and the period of the current limitation mode can be extended to a relatively long time. Relatively long means here, for example tens of milliseconds which is about two dimensions higher than it would be possible without the freewheeling path. The current limitation mode can immediately be stopped by de-activating the switchable freewheeling path, and switching off the line circuit semiconductors.

As mentioned above, for turning on and off the switches S1 and Sf, the SSCB arrangement may comprise a controller or the output protection circuit may receive signals from a controller, which may be part of the converter. The controller may be or may comprise a microcontroller, an FPGA, and ASIC or any other logical, digital, analog, or mixed circuit, and/or sensors such as current sensors and voltage sensors. The output protection circuit may further comprise a memory to which the controller has access for storing values, and for instructions, e.g., for changing the operation modes and for controlling the switches Sf, S1 and S2. The output protection circuit may enter the current limitation mode when a fault is detected. The fault may be detected, for example, by a sensor, and the controller reacts on the sensor signal by providing control signals that switch S1 and Sf as described herein.

According to an embodiment, the switchable freewheeling path comprises a freewheeling diode Df in series with a circuit comprising a freewheel semiconductor switch Sf and a parallel voltage clamping device Zf; wherein the cathode of the diode Df is connected to the collector/drain terminal of the freewheel semiconductor switch or the anode of the diode Df is connected to the emitter/source terminal of the freewheel semiconductor switch Sf.

The freewheel semiconductor switch Sf allows to activate or de-activate the freewheeling path. In case the switch is on, the current in case of a fault can flow through this switch from the negative line to the line inductance, depending on the state of the switches of the connective circuit. As known to a skilled person, the term "emitter" corresponds to the term "source" and the term "collector" to the term "drain", depending on the used type of transistor.

According to an embodiment, a clamping voltage Vzf of the voltage clamping device Zf is chosen to be smaller than the difference of clamping voltage Vz1 of Z1 and the nominal bus voltage Vn: Vzf < Vz1-Vn.

This avoids pushing back the fault current to the upstream side while the freewheeling branch is deactivated and avoids associated overvoltage spikes.

According to an alternative embodiment, the switchable freewheeling path comprises a freewheeling diode Df in series with a freewheel semiconductor switch (Sf) and a voltage clamping device Zf parallel to the freewheeling diode Df and the freewheel semiconductor switch (Sf); wherein the cathode of the diode Df is connected to the collector/drain terminal of the freewheel semiconductor switch or the anode of the diode Df is connected to the emitter/source of the freewheel semiconductor switch Sf.

According to an alternative embodiment, the freewheeling path comprises a reverse-blocking device parallel to a voltage clamping device Zf.

According to an alternative embodiment, the freewheeling path comprises a freewheeling diode Df in series with an avalanche rated LV MOSFET with high repetitive avalanche capability; wherein the cathode of the diode Df is connected to the drain terminal of the LV MOSFET or the anode of the diode Df is connected to the source of the LV MOSFET.

According to an embodiment, the voltage clamping devices Z1 and / or Zf are one of varistors, Zener diodes, or transient voltage suppressor (TVS) diodes.

According to an embodiment, in the current limitation mode, the freewheel semiconductor switch (Sf), the reverse blocking device or the LV MOSFET is in a turned-on state to activate the freewheeling path.

According to an alternative embodiment, in a fast current interruption mode, the at least one semiconductor switch of the connective circuit is turned off and the freewheeling path is configured to be de-activated by turning off the freewheel semiconductor switch (Sf), the reverse blocking device or the LV MOSFET.

According to an alternative embodiment, the connective circuit comprises two semiconductors that share a common emitter/source, and the freewheeling path is coupled on one end to the common emitter/source.

According to an alternative embodiment, the SSCB arrangement may comprise a mechanical galvanic isolation and/or a varistor at an input side and/or at an output side of the SSCB.

According to an embodiment, the SSCB further comprises a mechanical breaker parallel to the voltage clamping device Z1 that is connected in parallel to the at least one semiconductor switch of the connective circuit.

According to a second aspect, a method for protecting a power network is provided, comprising the steps:
by using an SSCB arrangement as described herein, in a current limitation mode, activating the switchable freewheeling path and repeatedly turning on and turning off the at least one semiconductor switch of the connective circuit.

The method may be supported by a controller as described above, voltage sensors current sensors, analog and/or digital circuits, etc.

According to a third aspect, use of the SSBC arrangement is presented. The SSBC arrangement can be used for limiting current in case of a fault in a power network, for fast interrupting current in case of a fault in a power network, for pre-charging a dead DC bus, or for energizing input capacitors of converters.

Summarized, a multifunction SSCB based on a modified circuit with an interruptible freewheeling path is proposed that enables current limiting functionality for several tens of milliseconds for SSCBs and hybrid breakers as it reduces the losses in the varistor and the switching frequency of the semiconductors substantially. The freewheeling path can be deactivated to interrupt the fault current quickly and to dissipate the fault energy in a safe way. Consequently, the invention enables effective current limitation and allows coordination with slow downstream breakers of mechanical or hybrid type. It enables new protection concepts such as zero current switching of downstream switches (contactors, relays). It enables other features, such as precharging of a dead bus. The new circuit is simply an extension to standard SSCB configuration. It can also be adopted to hybrid circuit breakers.

These and other features, aspects and advantages of the present invention will become better understood with reference to the accompanying figures and the following description.

### Short Description of the Figures

Fig. 1 shows a general diagram of the SSCB arrangement with a switchable freewheeling path.
Fig. 2 shows a circuit a diagram of the SSCB arrangement according to an embodiment.
Figs. 3a to 3c show a circuit diagram of a standard SSCB arrangement, the related high switching frequency, high losses in a varistor and current through a line inductance.
Figs. 4a to 4c show a circuit diagram of a SSCB arrangement according to an embodiment, the related switching frequency, losses in a varistor and current through a line inductance.
Fig. 5 shows a diagram of the inductor current of the circuit according to Fig. 4a over time, with fast interruption.
Fig. 6 shows a diagram of the inductor current of the circuit according to Fig. 4a over time, without fast interruption and with long tail current.
Fig. 7a shows the current flow in the circuit according to Fig. 4a with a fault on output side and during a conduction state.
Fig. 7b shows the current flow in the circuit according to Fig. 4a with a fault on output side and during a freewheeling state.
Fig. 7c shows the current flow in the circuit according to Fig. 4a with a fault on output side and during a fast interruption state.
Fig. 8a shows the current flow in the circuit according to Fig. 4a with a fault on input side and during a conduction state.
Fig. 8b shows the current flow in the circuit according to Fig. 4a with a fault on input side and during a freewheeling state.
Fig. 8c shows the current flow in the circuit according to Fig. 4a with a fault on input side and during a fast interruption state.
Fig. 9 shows a diagram of an application with several downstream branches where a faulty branch is isolated.
Fig. 10 shows a diagram with optional galvanic isolation with additional mechanical switches.
Fig. 11 shows a diagram with optional varistors to protect all devices from lightning impulse.
Figs. 12a to 12d show alternative arrangement of devices.
Fig. 13 shows a diagram of a first variant of the multifunction SSCB for bipolar DC grids.
Fig. 14 shows a diagram of a second variant of the multifunction SSCB for bipolar DC grids.
Fig. 15 shows a diagram of a multifunction hybrid breaker.
Figs. 16a to 16e show variants of the devices of the freewheeling circuit.
Fig. 17 shows a diagram of a typical SSCB arrangement.
Fig. 18 shows a flow diagram of a method.

### Detailed Description of Embodiments

Corresponding parts are provided with the same reference symbols in all figures.

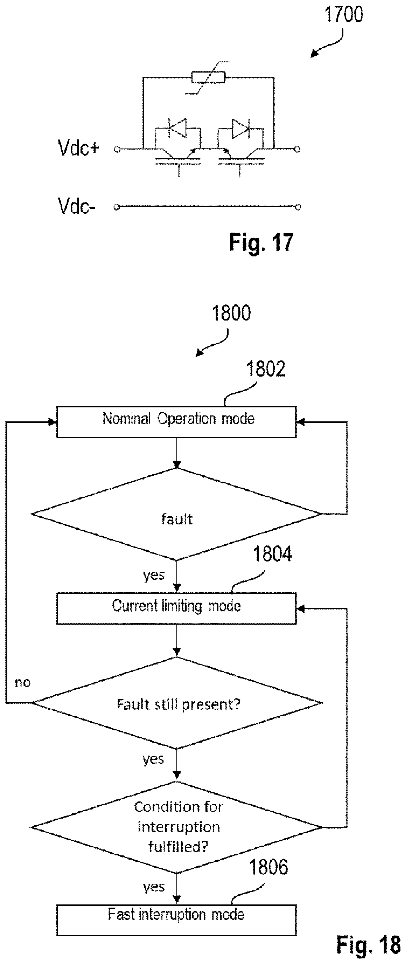

Fig. 17 shows a diagram of a typical SSCB arrangement 1700 with two anti-serial semiconductors in common-emitter configuration and a parallel varistor.

The typical SSCB arrangement 1700 is typically used to interrupt a fault current by turning off the two anti-serial semiconductors permanently. Alternatively, it can be used to limit the fault current to a predefined value by repeatedly turning on and off the two anti-serial semiconductors. In such a current limiting mode, after a few hundreds of microseconds, typically the maximum energy of the varistor is reached and current limitation cannot be continued without destruction of device. Coordination with slower downstream breakers is still an unsolved challenge, especially if downstream breakers are mechanical or hybrid breakers, which would need several milliseconds to open. Another issue is the typically very high resulting switching frequency for the semiconductors of several tens of kilohertz while current limitation is active, as the varistor inserts a high counter voltage. This can be a severe issue for high current SSCBs based on IGCTs that allow only a limited switching frequency.

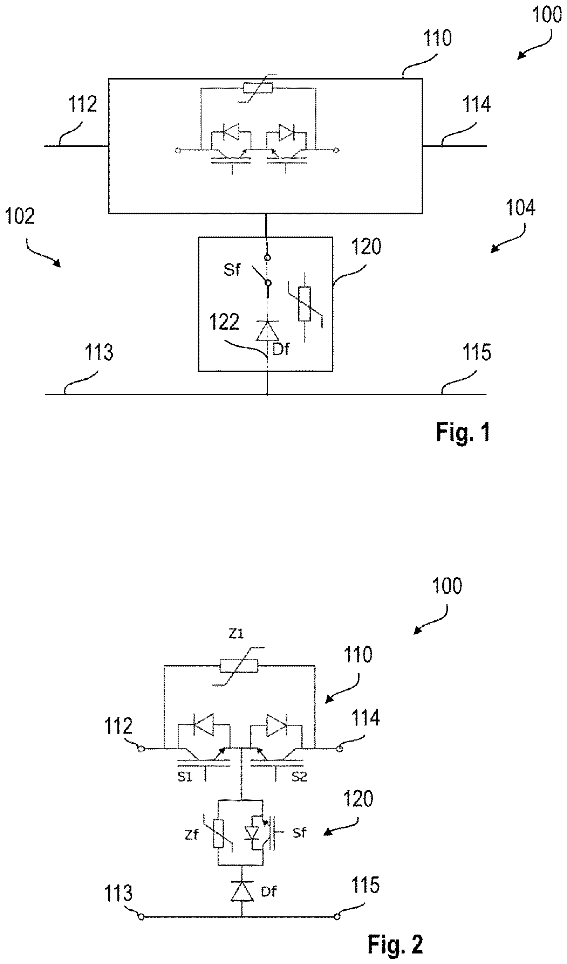

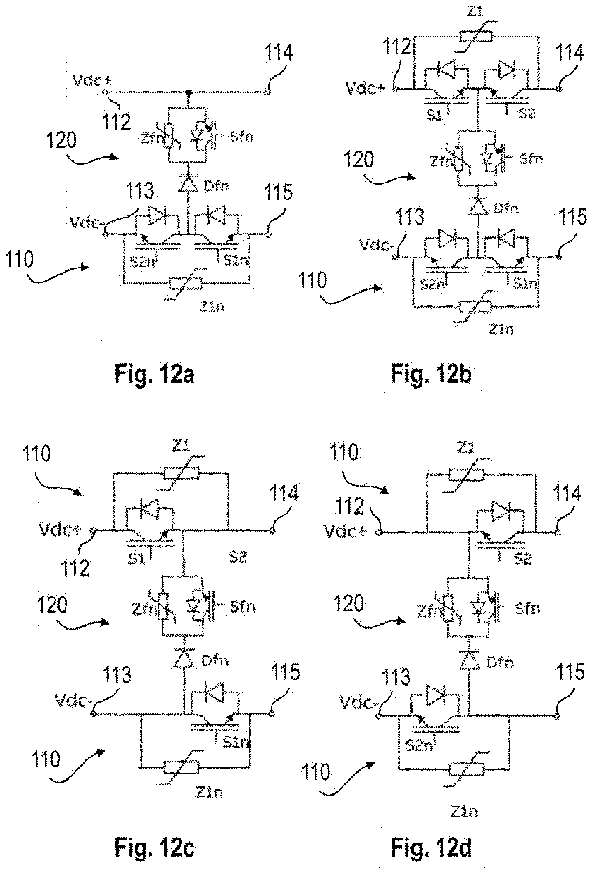

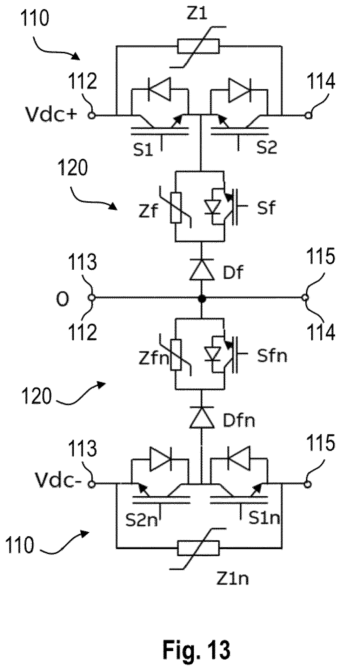

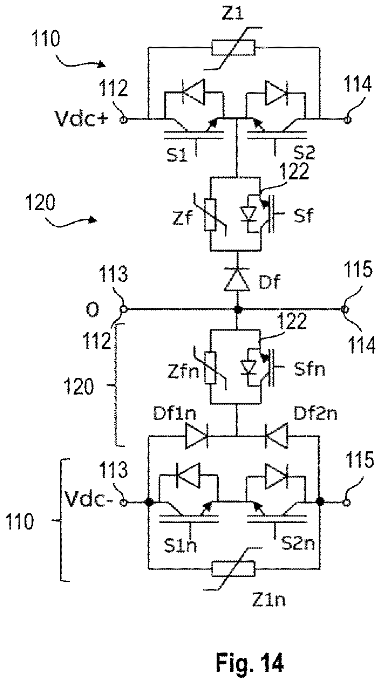

Fig. 1 shows a diagram of the multifunctional SSCB arrangement 100. The SSCB arrangement 100 has an input side 102 and an output side 104, wherein the input side 102 has an input terminal 112 at a first voltage and an input terminal 113 at a second voltage, and the output side 104 has an output terminal 114 at the first voltage and an output terminal 115 at the second voltage. The SSCB arrangement 100 further comprises a connective circuit 110 similar to the one shown in Fig. 17, and an additional vertical freewheeling circuit 120. The freewheeling circuit 120 comprises a switchable freewheeling path 122 indicated by a dashed line. The freewheeling path 122 again comprises a freewheeling diode Df and a switch Sf. In the generalized Fig. 1, the devices in block 120 are not drawn connected to each other, since there are several options how to connect them as described in the following figures 2, 4 and 16a 16e. The connective circuit 110 may, for example, be realized as shown in Fig. 2, which is based on the circuit as shown in Fig. 17, comprising two anti-serial semiconductors S1, S2 in common-emitter configuration. Similarly, the devices in block 110 in Fig. 1 shall be understood as an illustration only. Various embodiments for the realization of the connective circuit 110 between the input terminal 112, 113 and output terminal 114, 115 at first voltage level and at second voltage level are shown in Figs. 12a-12d. First voltage level and second voltage level can be understood as plus and minus or plus and neutral, or neutral and minus, as shown in Figs. 13 and 14.

The arrangements allow for three operation modes: a normal conduction mode, a current limitation mode, and a fast current interruption mode with safe energy dissipation as explained in the following at hand of the exemplary embodiment shown in Fig 2.

The connective circuit 110 in Fig. 2 comprises two anti-serial semiconductors S1, S2 and a parallel varistor Z1. The vertical freewheeling circuit 120 comprises a diode Df in series with a parallel circuit consisting of a varistor Zf and a semiconductor switch Sf. In normal conduction mode, the main switches S1 and S2 of the connective circuit 110 are turned on continuously. Current flows through the main switches S1, S2 normally, the freewheeling path Df, Zf is blocked due to negatively biased diode Df. The semiconductor switch Sf can either be turned off or on, but beneficially stays turned on.

In case of a detected fault on either side of the breaker arrangement 100, the current can be limited to a given value in a low loss process by entering the current limitation mode. In this mode, Sf needs to be turned on continuously to ensure that the freewheeling path 122 Df, Sf is activated. S1 and S2 are used to limit the fault current by repeatedly turning off and on and forcing the current to the activated freewheeling path 122 Df, Sf. Due to the low voltage drop of the freewheeling path defined by the diode Df and the switches Sf and S2 or S1, a substantially reduced switching frequency of the semiconductors is achieved during the current limitation process, resulting in substantially lower switching frequency, lower switching losses in S1 and S2 and lower energy losses in varistor Z1. Consequently, current limitation mode is possible for an extended time period of several tens of milliseconds.

Finally, after an adjustable time period staying in the current limitation phase, the fast current interruption mode can be activated. S1 and S2 are turned off and the freewheeling path Df, Sf is closed by turning off Sf. The fault current is then forced to the varistor Zf and the fault energy is dissipated quickly and in a safe location.

This concept can also be applied to hybrid circuit breakers. The fault currents can be limited for several tens of milliseconds to coordinate with slower downstream breakers of mechanical or hybrid type. The concept can be used further to implement pre-charge current control in order to energize a dead bus and input capacitors of converters.

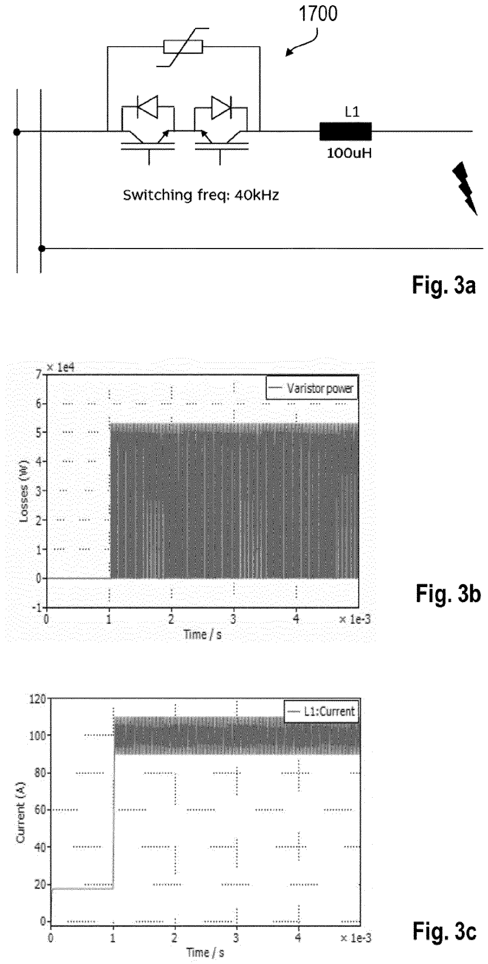

Fig. 3a shows a standard conventional SSCB arrangement 1700 with two anti-serial semiconductor switches in parallel to a varistor and a line inductance L1. Fig. 3b shows the losses at the varistor, and Fig. 3c the current through L1 during current limiting operation of the conventional SSCB. Figs. 3a to 3c illustrate the issues using standard SSCB to limit the fault current. To limit the current during a fault using a typical SSCB 1700, a tolerance band control can be used to repeatedly turn on and turn off the anti-serial semiconductors. An example with a current limit of 110 A using a tolerance band of 20 A is shown in Figure 3c. The total downstream line inductance, i.e. the inductance on the output side, is 100 µH and the upstream line inductance, i.e. the inductance on the input side, is 2 µH (not shown). An ideal short circuit fault is applied at the end of the line after 1 ms. If the current reaches the upper threshold of the tolerance band, the semiconductors are turned off and the current commutates to the varistor. The varistor creates a voltage Vt that is typically a few hundred Volts higher than the nominal system voltage Vn. The difference between the nominal voltage and the varistor voltage (a few hundred volts with opposite sign) is applied to the total line inductance: VL = Vn-Vt = L*di/dt ≈ -200 V, which reduces the fault current rapidly. The current will reach the lower threshold of the tolerance band within a few microseconds. When reaching the lower threshold, the semiconductors are turned on again. Consequently, a series of turn-off and turn-on events will occur with a very high repetition rate. This leads to a high switching frequency of the semiconductors, which is 40 kHz in this example, and which in turn creates high switching losses in the semiconductors.

Additionally, for every turn-off event, major part of the stored energy in the line inductance is burned in the varistor. Due to the high repetition rate, the average losses in the varistor can reach a very high value, for example 35 kW. This behavior leads to the following major issues that limit the feasible current limiting phase to a few hundreds of microseconds only:
- The maximum dissipation energy of the varistor is reached within a few tens of microseconds and the varistor will overheat and fail if no costly high performance cooling concept is applied.
- The high switching frequency will create high switching losses in the semiconductors.

This leads to excessive temperatures and failure if no costly high performance cooling concept is applied.
- The required switching frequency often cannot be achieved in high-current SSCBs with IGCTs as the gate driver unit has a limited switching capability in the lower kilohertz range
- The achievable time duration for current limiting operation is very low and is a showstopper for many protection concepts based on current limitation, such as coordination with hybrid or mechanical downstream breakers, or pre-charging of dead bus, or inrush current limitation.

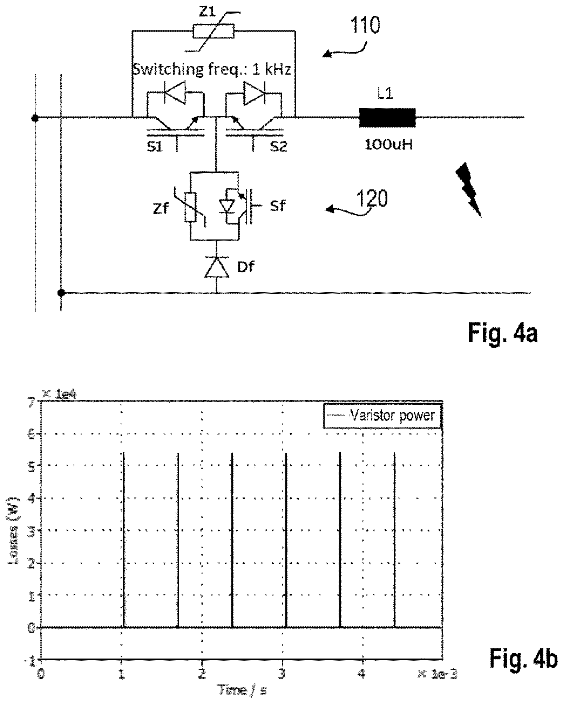

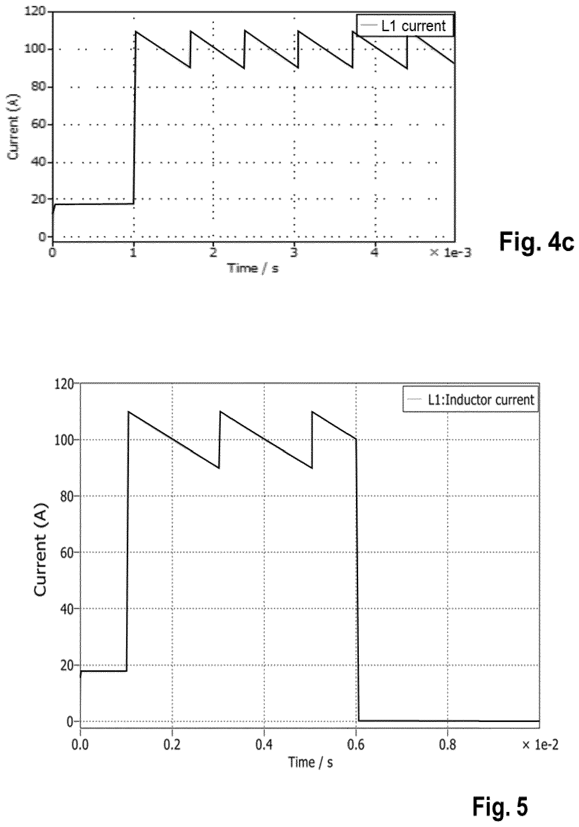

Fig. 4a shows the same SSCB arrangement as in Fig. 3a with a connective circuit 110 consisting of two anti-serial semiconductor switches S1, S2 in parallel to a varistor Z1, and a line inductance L1, however, with a proposed additional freewheeling circuit 120 with a switchable freewheeling path 122. The additional freewheeling circuit 120 in this example consists of a freewheeling diode Df in series with a semiconductor parallel Sf to a varistor Zf. The freewheeling path consists of diode Df and semiconductor Sf. During current limiting operation, it is supposed that semiconductor Sf is switched on. Figs. 4b and 4c show the behavior of the proposed SSCB arrangement with freewheeling path Df, Sf during a current limiting period. With the addition of the proposed freewheeling branch 120, the modified SSCB has a very different behavior during the current limiting period and introduces new functionality.

In the exemplary current limiting mode, the freewheeling activation switch Sf is turned on continuously. The current limit is 110 A with a tolerance band of 20 A. The total downstream line inductance is 100 µH and the upstream line inductance is 2 µH (not shown). An ideal short circuit fault is applied at the end of the line after 1 ms. When the current reaches the upper current threshold, the semiconductor switches S1, S2 are turned off. Then, the input and output current of the breaker split into two separate paths. Whereas the input (upstream) current commutates to the varistor Z1 as in the previous example, the output (downstream) current commutates to the freewheeling path Df, Sf and the antiparallel diode of the semiconductor S2 and circulates. Only the inductive energy of the upstream line inductance is dissipated in the varistor Z1. While the output current circulates over the freewheeling path Df, Sf, a reduced voltage (just a few volts, that is the sum Vfd of the forward voltage drops of freewheeling diode Df, the switch Sf, and the antiparallel diode of S2) is applied to the downstream line inductance and leads to a slow reduction of the output current: VL = -Vfd*2 = L*di/dt ≈ -2 V. As the applied negative voltage is roughly 100 times smaller compared to the previous example, the time period until the current reaches the lower current threshold is 100 times longer. Consequently, the repetition rate is substantially reduced. When the current reaches the lower threshold of the tolerance band, the switches S1, S2 are turned on again until the current reaches the upper threshold; the sequence is repeated as long as current limitation is needed. In the shown example, the switching frequency reduces to 1.5 kHz and the average varistor losses come down to just 70 W, which corresponds to a reduction by a factor of 500. The reduced varistor losses allow a substantially increased current limiting period of tens of milliseconds. The switching frequency is in a range that is feasible also for IGCT-based high current SSCBs. Consequently, the modification enables coordination with mechanical or hybrid downstream breakers which have opening times up to tens of milliseconds. Furthermore, it allows to effectively pre-charge a dead bus and limit inrush currents of load converters.

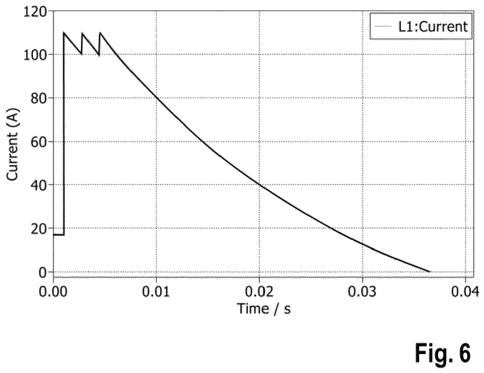

After the current limitation period, the fault can be interrupted quickly by opening (turn off) the switch Sf. The switches S1, S2 stay turned off. This forces the fault current to the varistor Zf. The downstream fault energy is then dissipated in Zf and the current decays to zero within a few microseconds. An example where Sf is turned off after t = 6 ms is shown in Fig. 5. If the interruption switch would not be present, and only a freewheeling diode was used as in prior art, a long-lasting tail current can occur as shown in Fig. 6. This tail current is undesirable as the fault energy is being dissipated in the system instead of in the SSCB 100. Furthermore, this tail-current avoids innovative coordination schemes with simple down-stream relays as they need to interrupt significant current and cannot rely on zero current switching, a concept explained in the next section. Therefore, a fast and safe fault current interruption is achieved by turning off Sf.

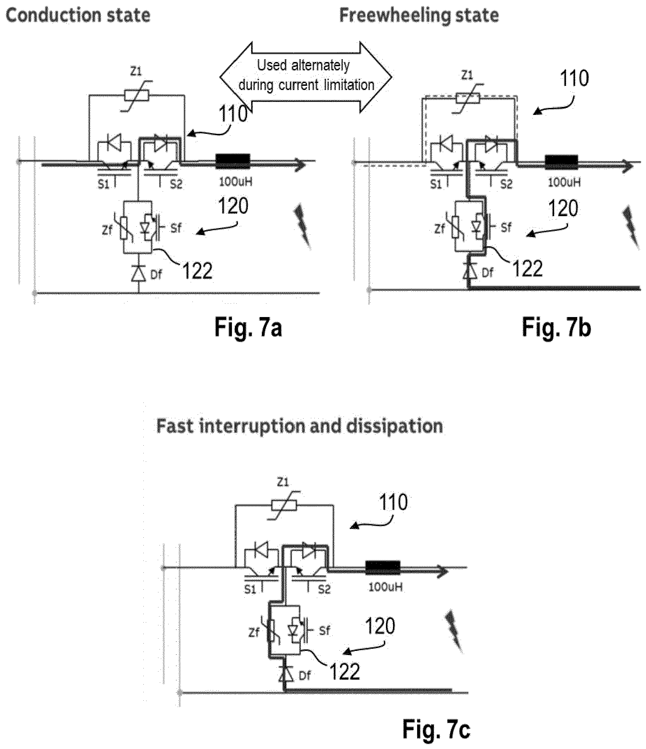

The current paths for a fault on the output side (right side in the figures) of the breaker 100 are shown in Figs. 7a to 7c. Fig. 7a shows the nominal current path for positive current, i.e., the normal conduction mode and current build-up during current limiting phase. The current flows from the input side through the closed switch S1 and the antiparallel diode of switch S2 to the output side. Fig. 7b shows the current freewheeling during current limiting phase. The current is drawn from the negative line through the freewheeling path 122 and flows further through the antiparallel diode of switch S2 to the positive line of the output side of the SSCB 100. Fig. 7c shows the fault interruption and energy dissipation in Zf with freewheeling path 122 deactivated.

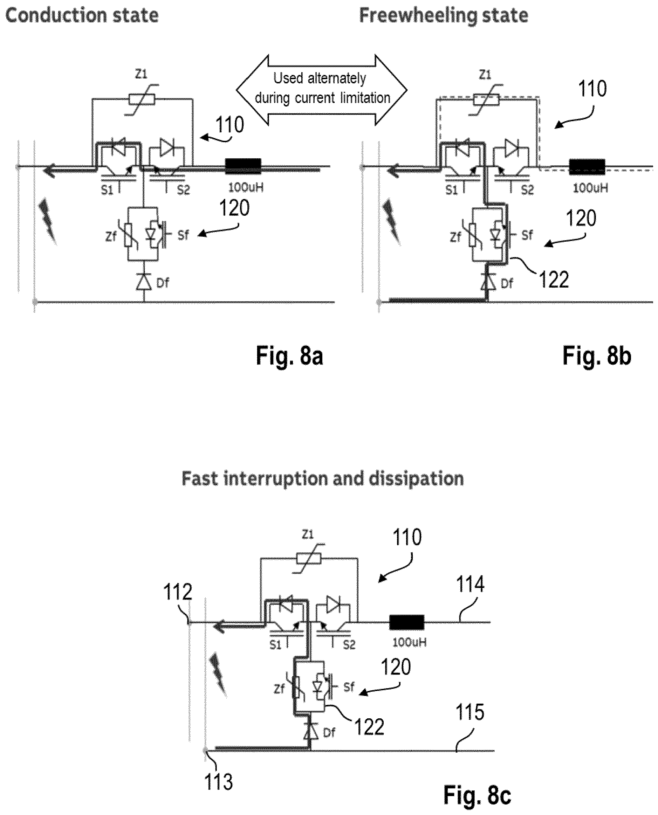

Figs. 8a to 8c show the current path for negative current and/or a fault on the input side (left side in the figures) of the breaker 100. In this case, the fault current flows in opposite direction. Fig. 8a shows the current path for negative current during the normal conduction mode and current build-up during current limiting phase. The current flows from the output side through the closed switch S2 and the antiparallel diode of switch S1 to the input side. Fig. 8b shows the current freewheeling during current limiting phase. The current is drawn from the negative line through the freewheeling path 122 and flows further through the antiparallel diode of switch S1 to the positive line of the input side of the SSCB. Fig. 8c shows the fault interruption and energy dissipation in Zf with freewheeling path 122 deactivated.

The multifunction SSCB 100 can also be used to pre-charge a dead DC bus (i.e., a DC bus which is discharged and has zero voltage), a functionality known as blackstart capability. As the multifunction SSCB features output current control functionality even in case the DC bus voltage is zero, the DC bus and potentially connected load converters with input capacitors can be charged with a predefined, limited current and the bus voltage is slowly ramped up to nominal voltage.

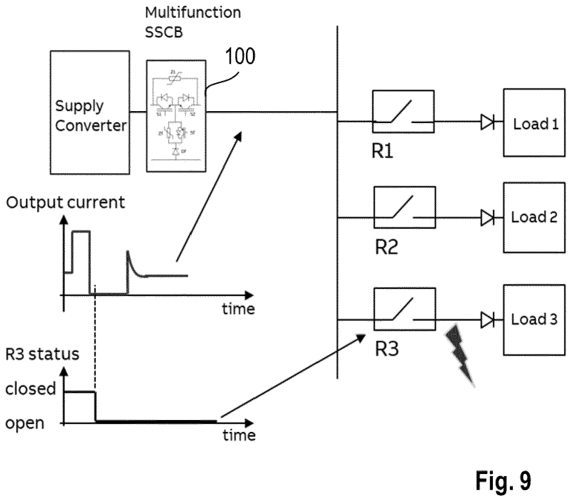

The multifunction SSCB 100 can also be used to ramp down the fault current within a few microseconds to allow downstream switches of mechanical type (contactors, relays) to open under zero current condition. It enables new protection coordination schemes. An example is shown in Fig. 9.

Fig. 9 shows the isolation of a faulty branch with simple contactors or relays under zero current condition. As shown in Fig. 9, instead of using mechanical circuit breakers to protect downstream branches, simple contactors or relays are installed. If a fault occurs in branch 3 (comprising switch R3 and load 3), the multifunction SSCB 100 immediately limits the fault current to an admissible level for a given time duration. The time duration should be enough for the downstream switch to notice the fault. Afterwards, the multifunction SSCB ramps down the fault current to zero and gives the downstream switch R3 the chance to open under zero current condition. Afterwards, the multifunction SSCB 100 ramps current up again and reestablishes the bus voltage within a few hundreds of microseconds. The fault is isolated and cleared. If several supply converters are being used, for every converter a multifunction SSCB 100 needs to be installed.

It is possible to implement the freewheeling activation switch Sf and its parallel varistor Zf with devices having lower rated voltage compared to S1, S2 and Df. This can be beneficial e.g. in medium voltage (MV) applications, in which S1, S2 could be implemented with expensive MV 4.5 kV IGCTs. Then, Sf could be implemented with a 600 V low voltage (LV) IGBT and Zf with a standard 400 V LV varistor.

In another example for LV applications, S1 and S2 might be implemented using 1.2 kV SiC MOSFETs. Again, Sf could be implemented with a very cheap 100 V LV Si MOSFET and Zf with a cheap 50 V varistor (MOV). Ideally, the clamping voltage Vzf of varistor Zf is chosen to be smaller than the difference of clamping voltage Vz1 of Z1 and the nominal bus voltage Vn: Vzf < Vz1-Vn. This avoids pushing back the fault current to the upstream side while freewheeling branch 122 is deactivated and avoids associated overvoltage spikes.

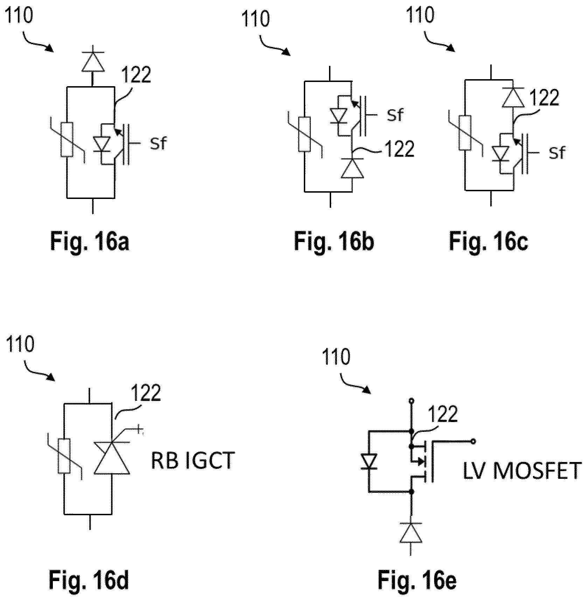

Various implementation options of the freewheeling circuit 110 are presented in Figs. 16a to 16d. Fig. 16a shows an option where, Df and the parallel circuit of Zf and Sf can place position: Df is connected between the mid-point of S1, S2 and the parallel circuit of Zf and Sf is connected to the negative/neutral power supply rail. A further alternative is shown in Fig. 16b and 16c, where the varistor Zf is connected across Sf and Df. The freewheeling path in Figs. 16b and 16c differ by the order of the diode Df and Sf. Alternatively, as shown in Fig. 16d, switch Sf and diode Df could be replaced by a reverse-blocking device, such as an RB IGCT. As a further alternative, as shown in Fig. 16e, the parallel connection of Zf and Sf could be replaced with a semiconductor that has high repetitive avalanche capability, such as an avalanche rated LV MOSFET.

The varistors Z1 and Zf could be replaced by any other voltage clamping device such as Zener diodes or transient voltage suppressor (TVS) diodes.

The proposed concept is bidirectional. That is, the same functionality is achieved if the fault occurs on the left side of the breaker or on the right side of the breaker. It is possible to create unidirectional variants of the multifunction SSCB easily. Be replacing S2 with a conductor, a unidirectional variant protecting against faults on the right side (downstream side) is created. Symmetrically, by replacing instead S1 with a conductor, a unidirectional variant protecting against faults on the left side (upstream side) is created.

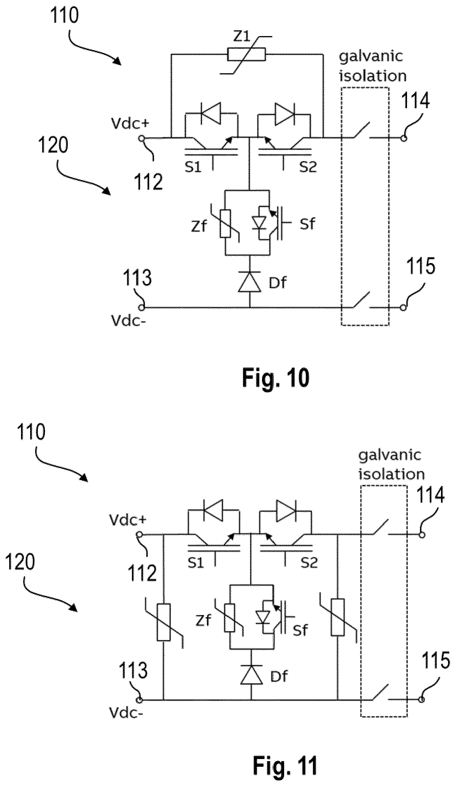

Optionally, the proposed multifunction SSCB 100 may have additional mechanical contacts for galvanic isolation either at input or output side as shown in Fig. 10.

Optionally, small inductors at input and/or at output side may be needed to limit maximum di/dt and for current control purposes.

Optionally, current sensors are needed at input and at output side for current control purposes.

Fig. 11 shows optional MOVs to protect all devices from lightning impulse, which requires an insulation voltage capability between (+) and (-). For this, optionally voltage clamping devices, such as Varistors (MOV), Zener diodes, capacitors, RC or RCD clamps can be put at input and/or output of the SSCB (connected between positive and negative rail) to protect the semiconductors from lightning impulse. In this case, the MOV Z1 across S1, S2 can be removed as shown in Fig. 11.

Fig. 12a to 12d show alternative arrangements of devices of the connective circuit 110. The device arrangement presented in the previous examples is not unique. There are various other arrangements that offer the same functionality:

Fig. 12a shows an arrangement where the series semiconductors S1n/S2n are connected to the (-) bus (n stands for "negative").

Fig. 12b shows an arrangement where the series semiconductors are both, on (+) and (-) bus.

Fig. 12c shows an arrangement where the series semiconductors are distributed to (+) and (-) bus, thereby still being bidirectional.

Fig. 12d shows another way to distribute the series semiconductors to (+) and (-) bus, thereby still being bidirectional.

It is possible to extend the multifunction SSCB 100 such that it can be used in bipolar DC grids having a positive, a negative and a neutral supply line.

In a first variant, as shown in Fig. 13, the main switches S1n and S2n, which are used to interrupt the negative supply line, are connected in common collector arrangement, what is different compared to S1 and S2, which are connected in common emitter configuration. The second interruptible freewheeling circuit 110 consisting of Dfn and Zfn/Sfn is connected in between the neutral supply line and the common collector connection of S1n and S2n. The freewheeling diode Dfn and the parallel connection of Zfn//Sfn could again swap position.

Fig. 14 shows the multifunction SSCB 100 for bipolar DC grids in a second variant. In this variant, the interruptible freewheeling path is connected with two diodes Df1n, Df2n to the negative supply line Vdc-. The main switches S1n and S2n, which are used to interrupt the negative supply line, are connected in common emitter arrangement. Now, two freewheeling diodes Df1n and Df2n are needed to connect the second interruptible freewheeling circuit (Sfn // Zfn) to the negative supply line.

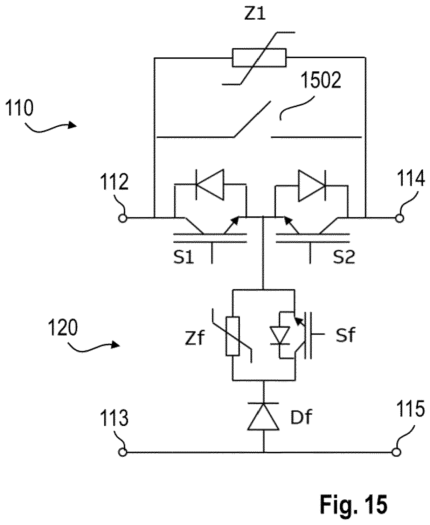

Fig. 15 shows a multifunction hybrid breaker. The freewheeling circuit can be added to hybrid breaker concepts as well. In case of fault, first the semiconductor switches are closed until the mechanical breaker 1502 opens and the current has commutated to the parallel semiconductor branch. Then, current limitation can be done by turning off and on the semiconductor switches S1, S2 as described in the previous section. The mechanical breaker 1502 could also have an additional semiconductor switch in series (a so-called commutation switch) to improve and speed up commutation from the mechanical breaker 1502 to the parallel semiconductor path (not shown in Fig. 15). The hybrid approach can also be applied to the other variants shown in previous section.

Fig. 18 shows a method 1800 for protecting power networks. The method is based on the SSCB arrangement 100 as described in this disclosure. The method starts with a nominal operation mode 1802, where at least switches S1 and S2 are turned on, so that the nominal current can flow through the switch S1 and the antiparallel diode of S2 from the input side to the output side, or vice versa, through the switch S2 and the antiparallel diode of S1 from the output side to the input side.

If a fault occurs, the method enters the current limiting mode 1804, in which the freewheeling semiconductor switch Sf is turned on and S1 and S2 are repeatedly switched off and switched on, so that the current flow alternatingly via the nominal path as described for the previous step and the freewheeling path. The switching frequency will be low due to the low voltage defined by the semiconductors of the freewheeling path and S1 or S2. The sequence is repeated as long as current limitation is needed. If it is detected that the fault or the overcurrent disappeared, nominal operation mode 1802 is re-entered. However, if fault or overcurrent is still present and if, e.g., an adjustable time period staying in the current limitation phase 1008 has expired or another condition for entering the fast interruption mode is fulfilled, the method enters the fast interruption mode 1806, in which the freewheeling semiconductor switch Sf is turned off and the power is dissipated in the voltage clamping device, e.g. varistor Zf.

### Reference Numerals

- 100: SSCB arrangement
- 102: input side of the SSCB
- 104: output side of the SSCB
- 112: input terminal at a first voltage
- 113: input terminal at a second voltage
- 114: output terminal at a first voltage
- 115: output terminal at a second voltage
- 110: connective circuit
- 120: freewheeling circuit
- 122: switchable freewheeling path
- 1502: mechanical breaker
- 1700: typical SSCB arrangement
- 1800: method
- 1802: method step: nominal operation mode
- 1804: method step: current limiting mode
- 1806: method step: fast interruption mode

## Claims

1. Multifunction Solid State Circuit Breaker, SSCB, arrangement (100) having an input side (102) and an output side (104), wherein the input side (102) has an input terminal (112) at a first voltage and an input terminal (113) at a second voltage, and the output side has an output terminal (114) at the first voltage and an output terminal (115) at the second voltage, wherein the SSCB (100) comprises
a connective circuit (110) between the input terminal (112) and the output terminal (114) at the first voltage, and / or a connecting circuit (110) between the input terminal (113) and the output terminal (115) at the second voltage; wherein the connective circuit (110) comprises at least one semiconductor switch, and a voltage clamping device Z1 parallel to the at least one semiconductor switch; wherein the input terminal (112) and the output terminal (114) at the first voltage and the input terminal (113) or the output terminal (115) at the second voltage are connected directly with each other in absence of the connective circuit (110);
and
a vertical freewheeling circuit (120) coupled between a first connection point between the input terminal (112) and the output terminal (114) at the first voltage and a second connection point between the input terminal (113) and the output terminal (115) at the second voltage, wherein the freewheeling circuit (120) includes a switchable freewheeling path (122).

2. SSCB arrangement (100) according to claim 1, wherein, in a current limitation mode, the switchable freewheeling path is configured to be activated and the at least one semiconductor switch of the connective circuit is configured to be repeatedly turned on and turned off.

3. SSCB arrangement (100) according to claim 1 or 2, wherein the switchable freewheeling path comprises a freewheeling diode Df in series with a circuit comprising a freewheel semiconductor switch Sf and a parallel voltage clamping device Zf; wherein the cathode of the diode Df is connected to the collector/drain terminal of the freewheel semiconductor switch or the anode of the diode Df is connected to the emitter/source terminal of the freewheel semiconductor switch Sf.

4. SSCB arrangement (100) according to any of the previous claims, wherein the clamping voltage Vzf of the voltage clamping device Zf is chosen to be smaller than the difference of clamping voltage Vz1 of Z1 and the nominal bus voltage Vn: Vzf < Vz1-Vn.

5. SSCB arrangement (100) according to claim 1 or 2, wherein the switchable freewheeling path comprises a freewheeling diode Df in series with a freewheel semiconductor switch (Sf) and a voltage clamping device Zf parallel to the freewheeling diode Df and the freewheel semiconductor switch (Sf); wherein the cathode of the diode Df is connected to the collector/drain terminal of the freewheel semiconductor switch or the anode of the diode Df is connected to the emitter/source of the freewheel semiconductor switch Sf.

6. SSCB arrangement (100) according to claim 1 or 2, wherein the switchable freewheeling path comprises a reverse-blocking device parallel to a voltage clamping device Zf.

7. SSCB arrangement (100) according to claim 1 or 2, wherein the switchable freewheeling path comprises a freewheeling diode Df in series with an avalanche rated LV MOSFET with high repetitive avalanche capability; wherein the cathode of the diode Df is connected to the drain terminal of the LV MOSFET or the anode of the diode Df is connected to the source of the LV MOSFET.

8. SSCB arrangement (100) according to any of the previous claims, wherein the voltage clamping devices Z1 and / or Zf are one of varistors, Zener diodes, or transient voltage suppressor (TVS) diodes.

9. SSCB arrangement (100) according to any of claims 3-8, wherein, in the current limitation mode, the freewheel semiconductor switch (Sf) according to claims 3 to 5, the reverse blocking device according to claim 6 or the LV MOSFET according to claim 7 is in a turned-on state to activate the switchable freewheeling path.

10. SSCB arrangement (100) according to any of the previous claims, wherein, in a fast current interruption mode, the at least one semiconductor switch of the connective circuit is turned off and the switchable freewheeling path is configured to be de-activated by turning off the freewheel semiconductor switch (Sf), the reverse blocking device or the LV MOSFET.

11. SSCB arrangement (100) according to any of the previous claims,
wherein the connective circuit comprises two semiconductors that share a common emitter/source, and the switchable freewheeling path is coupled on one end to the common emitter/source.

12. SSCB arrangement (100) according to any of the previous claims,
wherein the SSCB arrangement comprises a mechanical galvanic isolation and/or a varistor at an input side and/or at an output side of the SSCB.

13. SSCB arrangement (100) according to any of the previous claims,
wherein the SSCB further comprises a mechanical breaker parallel to the voltage clamping device Z1 that is connected in parallel to the at least one semiconductor switch of the connective circuit.

14. Method (1800) for protecting power networks, comprising the steps:
by using an SSCB arrangement according to claim 1:
in a current limitation mode, activating (1804) the switchable freewheeling path (122) and repeatedly turning on and turning off the at least one semiconductor switch of the connective circuit (110).

15. Use of the SSBC arrangement (100) according to claim 1 for limiting current in case of a fault in a power network, for fast interrupting current in case of a fault in a power network, for pre-charging a dead DC bus, or for energizing input capacitors of converters.
